# EUROPÄISCHE PATENTANMELDUNG

(11) **EP 1 413 395 A1**
(43) Veröffentlichungstag der Anmeldung: **28.04.2004**
(21) Anmeldenummer: 03019316.3
(22) Anmeldetag: 27.08.2003
(51) Int. Cl.: B23Q 39/02, B23Q 7/04, B23Q 1/01

(54) **Werkzeugmaschine**

(30) Priorität: 24.10.2002 DE 10249473
(71) Anmelder: EMAG MASCHINENFABRIK GMBH, D-73084 Salach (DE)
(72) Erfinder: Hessbrüggen, Norbert, 73084 Salach (DE); Böhringer, Hans Georg, 89191 Nellingen (DE)
(74) Vertreter: Schwarz, Thomas, Dipl.-Ing.

(57) **Zusammenfassung**

Die Erfindung betrifft eine Werkzeugmaschine, insbesondere zur Dreh-, Fräs-, Bohrund Schleifbearbeitung, mit einem Maschinengestell (1), mindestens einem am Maschinengestell (1) angeordneten Werkzeugträger (18, 19, 20) und zwei am Maschinenbett (1) angeordneten Werkstückträgem zur gemeinsamen Halterung eines Werkstücks (8) während der Bearbeitung. Zur Ermöglichung eines automatischen Werkstückwechsels auch ohne zusätzliche Handhabungsgeräte, sind die beiden Werkstückträger als Kreuzschlitten (4, 5) mit automatisch betätigbaren Werkstückhaltevorrichtungen (6, 7) ausgeführt, die zum automatischen Werkstückwechsel zwischen einem Arbeitsbereich (9) und einem Werkstückwechselbereich (10) verfahrbar sind.

## Beschreibung

Die Erfindung betrifft eine Werkzeugmaschine, insbesondere zur Dreh-, Fräs-, Bohr- und Schleifbearbeitung mindestens eines Werkstücks in einer Aufspannung, nach dem Oberbegriff des Anspruchs 1.

Eine derartige Werkzeugmaschine ist aus der DE 42 36 866 A1 bekannt. Dort besteht die Werkstückaufnahme aus zwei an der Vorderseite eines Maschinenbetts einander gegenüberliegend angeordneten Spindelstöcken, die jeweils eine Werkstückspindel und Spannvorrichtungen zur Halterung zweier getrennter Werkstücke oder eines wellenartigen Werkstücks zwischen den beiden Spindelstöcken aufweisen. Auf der Oberseite des Maschinenbetts ist ein Bettschlitten mit einem parallel zur Werkstückachse in der Z-Achse verfahrbaren Horizontalschlitten und einem an diesem in einer Y-Achse beweglichen Vertikalschlitten montiert. Der Vertikalschlitten trägt eine in der X-Achse bewegliche Pinole, an deren Vorderseite ein als Werkzeugrevolver ausgeführter Werkzeugträger angeordnet ist. Mit dieser bekannten Werkzeugmaschine können die zu bearbeitenden Werkstücke außer mit Hilfe von Drehwerkzeugen auch mit Bohr- oder Fräswerkzeugen bearbeitet werden. Allerdings ist dort kein automatischer Werkstückwechsel vorgesehen.

Aufgabe der Erfindung ist es, eine Werkzeugmaschine der eingangs genannten Art zu schaffen, die auch ohne zusätzliche Handhabungsgeräte einen automatischen Werkstückwechsel ermöglicht.

Diese Aufgabe wird durch eine Werkzeugmaschine mit den Merkmalen des Anspruchs 1 gelöst. Vorteilhafte Weiterbildungen und zweckmäßige Ausgestaltungen der Erfindung sind Gegenstand der Unteransprüche.

Die besonderen Vorteile der erfindungsgemäßen Werkzeugmaschine bestehen darin, daß die über die Kreuzschlitten verfahrbaren Werkstückhaltevorrichtungen sowohl die Bewegung und Positionierung der Werkstücke während der Bearbeitung als auch deren Transport zur Durchführung eines automatischen Werkstückwechsels übernehmen. Die Werkstücke können so in einer Aufspannung bearbeitet und danach auch ohne zusätzliche Handhabungseinrichtungen in eine Werkstückwechselposition verfahren und dort automatisch abgelegt werden. Anschließend kann ein neues Werkstück übernommen und in den Arbeitsbereich zur Bearbeitung verfahren werden. Besonders vorteilhaft können durch Bewegungen der Werkstückhaltevorichtung entlang der Bewegungsrichtungen der Kreuzschlitten auch Vorschub- und/oder Zustellbewegungen ausgeführt werden. Das Werkstück ist in den Werkstückhaltevorrichtungen zweckmäßigerweise drehbar aufgenommen und kann bei Bedarf über Drehantriebe, vorzugsweise Ringmotoren, in Rotation versetzt werden.

In einer besonders zweckmäßigen Ausführung enthält das Maschinengestell zwei voneinander beabstandete parallele Seitenwände, auf denen die beiden Kreuzschlitten mit den Werkstückhaltevorrichtungen oberhalb der Werkzeugträger verfahrbar angeordnet sind. Durch die hängende Anordnung der Werkstücke und die an der Unterseite angeordneten Werkzeuge können bei der Bearbeitung anfallende Späne frei nach unten fallen und dort auf einfache Weise abtransportiert werden.

In dem Arbeitsbereich ist mindestens ein Werkzeugträger zur Aufnahme von einem oder mehreren Werkzeugen vorhanden. Vorzugsweise sind mehrere Werkzeugträger in Form von Werkzeugrevolvern oder dgl. vorgesehen. In einer vorteilhaften Ausführung ist außerdem eine Motorspindel zum Antrieb von Bohrern, Schleif- oder Fräswerkzeugen installiert. Besonders vorteilhaft ist die Motorspindel entlang von Führungsbahnen verfahrbar, vorzugsweise in einer Richtung senkrecht zu den Bewegungsachsen der Kreuzschlitten. Nach einer weiteren Ausführung kann die Motorspindel um eine zu ihrer Drehachse senkrechte Achse geschwenkt werden. Im Wirkbereich der Motorspindel kann ein nicht dargestelltes Werkzeugmagazin vorgesehen sein, aus welchem bei Bedarf die benötigten Werkzeuge entnommen werden.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: eine erste Ausführungsfom einer erfindungsgemäßen Werkzeugmaschine in einer zum Teil geschnittenen Seitenansicht;
- **Figur 2**: einen Teil der in Figur 1 dargestellten Werkzeugmaschine in einer Draufsicht;
- **Figur 3**: einen Querschnitt der in Figur 1 gezeigten Werkzeugmaschine und
- **Figur 4**: einen Querschnitt eines weiteren Ausführungsbeispiels einer erfindungsgemäßen Werkzeugmaschine.

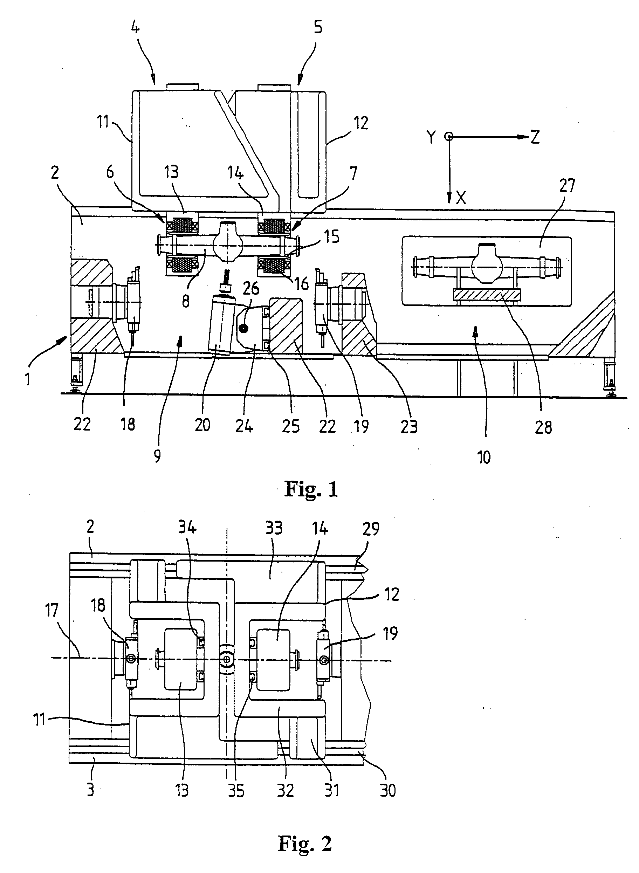

Die in den Figuren 1 bis 3 schematisch dargestellte Werkzeugmaschine zur Bearbeitung von Werkstücken durch Bohren, Drehen, Schleifen, Fräsen usw. enthält einen Maschinenständer 1 mit zwei voneinander beabstandeten parallelen Seitenwänden 2 und 3, auf denen zwei motorisch verfahrbare Kreuzschlitten 4 und 5 mit automatisch betätigbaren Werkstückhaltevorrichtungen 6 und 7 zur lösbaren Halterung, zum Antrieb und zum Verfahren eines Werkstücks 8 angeordnet sind. Die Werkzeugmaschine weist zwischen den beiden Seitenwänden 2 und 3 einen in Figur 1 auf der linken Seite gezeigten Arbeitsbereich 9 und einen auf der rechten Seite dargestellten Werkstückwechselbereich 10 auf, zwischen denen die beiden Kreuzschlitten 4 und 5 mit den Werkstückhaltevorrichtungen 6 und 7 verfahrbar sind. Die beiden Kreuzschlitten 4 und 5 enthalten jeweils einen auf den beiden Seitenwänden 2 und 3 in einer ersten Bewegungsachse (Z-Achse) verfahrbaren Längsschlitten 11 und 12 sowie einen dazu senkrecht in einer zweiten Bewegungsachse (X-Achse) verfahrbaren Querschlitten 13 bzw. 14, an denen die Werkstückhaltevorrichtungen 6 und 7 angeordnet sind. In der dargestellten Ausführung sind die beiden Längsschlitten 11 und 12 horizontal und die beiden Querschlitten 13 und 14 vertikal verfahrbar ausgeführt.

Die beiden Werkstückhaltevorrichtungen 6 und 7 weisen bei der gezeigten Ausführung jeweils eine in den beiden Querschlitten 13 und 14 angeordnete Spannaufnahme 15 auf, die z.B. aus einer Hohlwelle mit einem integriertem Spannmechanismus in Art eines Ringspannfutters oder dgl. besteht. Die beiden zueinander koaxialen Spannaufnahmen 15 sind innerhalb der Querschlitten 13 und 14 um ihre Mittelachse drehbar angeordnet und durch jeweils einen z.B. als Ringmotor ausgeführten Drehantrieb 16 motorisch antreibbar. Dadurch kann ein in den beiden Werkstückhaltevorrichtungen 6 und 7 gespanntes Werkstück zur Durchführung einer Drehbearbeitung rotatorisch angetrieben oder auch für weitere Bearbeitungen in einer gewünschten Winkelstellung positioniert werden. Je nach Form und Abmessungen des zu bearbeitenden Werkstücks können jedoch auch andere automatisch betätigbare Werkzeughaltevorrichtungen zum Einsatz gelangen.

In dem Arbeitsbereich 9 der Werkzeugmaschine sind mehrere Werkzeugträger angeordnet, die bei dem dargestellten Ausführungsbeispiel aus zwei voneinander beabstandeten und um eine horizontale Längsachse 17 verschwenkbaren Revolverköpfen 18 und 19 sowie einer dazwischen angeordneten Motorspindel 20 für drehangetriebene Werkzeuge, insbesondere Fräs-, Bohr- oder Schleifwerkzeuge, bestehen. Die Revolverköpfe 18 und 19 sowie die Motorspindel 20 sind an Querträgern 21, 22 und 23 angeordnet, die sich unterhalb der Kreuzschlitten 4 und 5 zwischen den beiden Seitenwangen 2 und 3 des Maschinenständers 1 erstrecken. An den Revolverköpfen 18 und 19 sind in an sich bekannter Weise mehrere über den Umfang verteilte Werkzeuge angeordnet. Die Motorspindel 20 ist in einer zu den Bewegungsachsen der Längs- und Querschlitten senkrechten dritten Bewegungsachse (Y-Achse) verfahrbar. Hierzu ist die Motorspindel 20 an einem Schlitten 24 angeordnet, der an der einen Seite des Querträgers 22 über horizontale Führungsschienen 25 durch einen nicht dargestellten Antrieb verfahrbar geführt ist. Außerdem ist die Motorspindel 20 um eine zu ihrer Drehachse senkrechte Schwenkachse 26 verschwenkbar an dem Schlitten 24 montiert. Im Wirkbereich der Motorspindel 20 kann ein nicht dargestelltes Werkzeugmagazin zum Speichern der für die Bearbeitung benötigten Werkzeuge vorgesehen sein.

In dem Werkstückwechselbereich 10 sind in den beiden Seitenwänden 2 und 3 des Maschinenständers 1 zwei gegenüberliegende Durchbrüche 27 angeordnet, durch die eine als Förderband ausgeführte Transporteinrichtung 28 verläuft. Mit dieser können zu bearbeitende Werkstücke in eine vorgegebene Werkstückwechselposition innerhalb der Werkzeugmaschine und bereits fertig bearbeitete Werkstücke in eine Entnahmeposition außerhalb der Werkzeugmaschine transportiert werden.

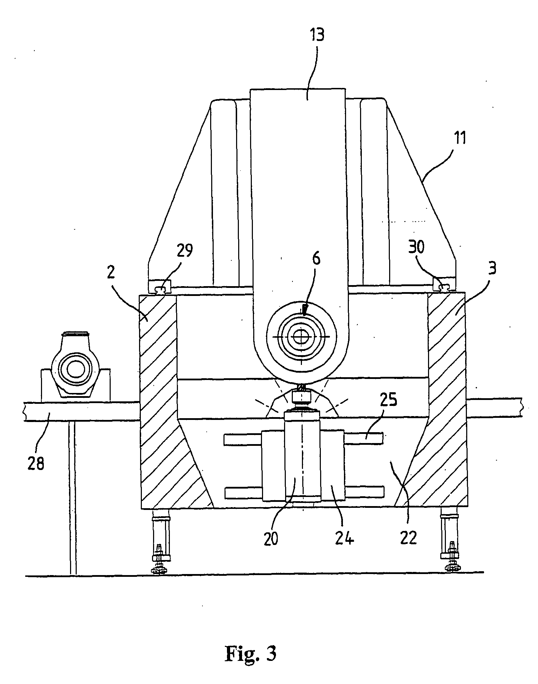

Wie aus den Figuren 2 und 3 hervorgeht, sind die Längsschlitten 11 und 12 auf der Oberseite der beiden Seitenwangen 2 und 3 über horizontale Führungsschienen 29 und 30 durch nicht dargestellte Antriebe verfahrbar geführt. Die beiden baugleich ausgeführten Längsschlitten 11 und 12 weisen einen in der Draufsicht U-förmigen Mittelbereich 32 und zwei seitliche Auflagebereiche 31 und 33 auf, von denen der eine Auflagebereich 31 eine geringere Länge und der andere Auflagebereich 33 eine größere Länge als der Mittelbereich 32 aufweist. In dem Mittelbereich 32 der beiden Längsschlitten 11 und 12 ist jeweils einer der Querschlitten 13 und 14 über vertikale Führungsschienen 34 und 35 durch einen entsprechenden Antrieb vertikal verfahrbar geführt. Die beiden Längsschlitten 11 und 12 sind um 180° zueinander versetzt auf den Seitenwangen 2 und 3 angeordnet, so daß sie zum Teil ineinander verfahrbar sind. Die unterschiedlichen Auflagebereiche 31 und 33 bilden eine stabile Dreiecksauflage, so daß sich die platzsparende Anordnung nicht nachteilig auf das Führungsverhältnis und damit auf die Steifigkeit der Werkzeugmaschine auswirkt.

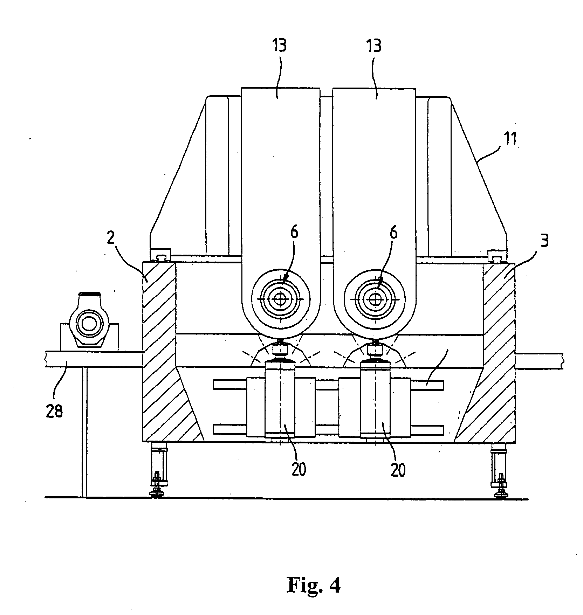

In Figur 4 ist ein weiteres Ausführungsbeispiel einer erfindungsgemäßen Werkzeugmaschine gezeigt. Diese unterscheidet sich von dem zuvor beschriebenen Ausführungsbeispiel nur dadurch, daß die Werkstückhaltevorrichtungen und die Werkzeugträger paarweise vorhanden sind. Die einander entsprechende Teile sind daher auch mit denselben Bezugszeichen versehen. An den beiden Längsschlitten 11 und 12 sind zwei vertikal verfahrbare Querschlitten 11 mit jeweils einer Werkstückhaltevorrichtung 6 angeordnet. Außerdem sind auch die Motorspindeln 20 und die nicht gezeigten Revolverköpfe jeweils doppelt vorgesehen. Dadurch können zwei Werkstücke gleichzeitig bearbeitet werden.

Anhand der in Figur 1 dargestellten Werkzeugmaschine wird im folgenden ein Bearbeitungsablauf bei einer Komplettbearbeitung mit automatischem Werkstückwechsel erläutert. Das Werkstück 8 ist dort ein Gehäuse einer Fahrzeugachse, das in den beiden Werkstückhaltevorrichtungen 6 und 7 gespannt ist. Zur Durchführung einer Drehbearbeitung z.B. an den von den beiden Werkstückhaltevorrichtungen zur Seite vorstehenden Enden des Werkstücks 8 wird dieses durch entsprechende Aktivierung der beiden Drehantriebe 16 um seine Längsachse gedreht. Mit Hilfe der in den Revolverköpfen gespannten Drehwerkzeuge und entsprechenden Verfahrbewegungen der beiden Kreuzschlitten 4 und 5 können dann die gewünschten Drehbearbeitungen ausgeführt werden. Die Zustellbewegung erfolgt dabei über die beiden Querschlitten 13 und 14, während die beiden Längsschlitten 11 und 12 für die Verfahrbewegungen in der Längsachse des Werkstücks bzw. den Vorschub sorgen. Mit Hilfe der zwischen den Revolverköpfen angeordneten Motorspindel 20 können dann die erforderlichen Bohr-, Fräs- oder Schleifbearbeitungen durchgeführt werden. Hierbei werden die Verfahrbewegungen in der X- und Z-Achse durch die Kreuzschlitten 4 und 5 und die Verfahrbewegung in der Y-Achse durch den Schlitten 24 durchgeführt. Nach der Bearbeitung können die fertig bearbeiteten Werkstücke durch entsprechendes Verfahren der beiden Kreuzschlitten 4 und 5 zu dem Werkstückwechselbereich 10 transportiert und dort in einer vorgegebenen Werkstückwechselposition z.B. auf eine geeignete Ablage auf dem Transportband 28 abgelegt werden. Nach dem Lösen der automatisch betätigbaren Spannaufnahmen 15 müssen die beiden Längsschlitten 11 und 12 nur auseinandergefahren werden, wodurch das Werkstück freigegeben wird. Dann kann das fertig bearbeitete Werkstück mit Hilfe des Transportbandes 28 aus der Werkstückwechselposition heraus- und gleichzeitig das nächste Werkstück in die Wechselposition hineintransportiert werden. Die beiden Längsschlitten können dann zur Aufnahme des neuen Werkstücks wieder zusammengefahren werden. Durch dann wieder gleichgerichtete Verfahrbewegungen der beiden Kreuzschlitten kann das neue Werkstück anschließend wieder in den Bearbeitungsbereich transportiert werden. Auf diese Weise kann eine voll automatisierte Komplettbearbeitung mit automatischem Werkstückwechsel durchgeführt werden.

## Patentansprüche

1. Werkzeugmaschine, insbesondere zur Dreh-, Fräs-, Bohr- und Schleifbearbeitung, mit einem Maschinengestell (1), mindestens einem am Maschinengestell (1) angeordneten Werkzeugträger (18, 19, 20) und zwei am Maschinengestell (1) angeordneten Werkstückträgern zur gemeinsamen Halterung eines Werkstücks (8) während der Bearbeitung, **dadurch gekennzeichnet, daß** die beiden Werkstückträger jeweils als Kreuzschlitten (4, 5) mit automatisch betätigbaren Werkstückhaltevorrichtungen (6, 7) ausgeführt sind, die zum automatischen Werkstückwechsel zwischen einem Arbeitsbereich (9) und einem Werkstückwechselbereich (10) verfahrbar sind.

2. Werkzeugmaschine nach Anspruch 1, **dadurch gekennzeichnet, daß** die beiden Kreuzschlitten (4, 5) in Richtung einer ersten Bewegungsachse (Z-Achse) verfahrbare Längsschlitten (11, 12) aufweisen, die zur Durchführung einer Vorschubbewegung während der Bearbeitung innerhalb des Arbeitsbereichs (9) und zum Transport des Werkstücks in eine Werkstückwechselposition innerhalb des Werrkstückwechselbereichs (10) gemeinsam in die gleiche Richtung und zur Ablage eines fertig bearbeiteten Werkstücks bzw. zur Aufnahme eines neuen Werkstücks in entgegengesetzten Richtungen motorisch verfahrbar sind.

3. Werkzeugmaschine nach Anspruch 2, **dadurch gekennzeichnet, daß** die beiden Kreuzschlitten (4, 5) jeweils mindestens einen Querschlitten (13, 14) enthalten, die zur Bewegung des Werkstücks (8) in einer zur ersten Bewegungsachse (Z-Achse) senkrechten zweiten Bewegungsachse (X-Achse) gemeinsam in gleiche Richtung verfahrbar sind.

4. Werkzeugmaschine nach einem der Ansprüche 1 bis 3, **dadurch gekennzeichnet, daß** die beiden Kreuzschlitten (4; 5) auf zwei voneinander beabstandeten parallelen Seitenwänden (2, 3) des Maschinengestells zwischen dem Arbeitsbereich (9) und dem dazu seitlich versetzten Werkstückwechselbereich (10) verfahrbar angeordnet sind.

5. Werkzeugmaschine nach Anspruch 3 oder 4, **dadurch gekennzeichnet, daß** die Werkstückhaltevorrichtungen (6, 7) eine in dem Querschlitten (13, 14) angeordnete Spannaufnahme (15) zur Aufnehmen und automatischen Spannen des Werkstücks (8) aufweisen.

6. Werkzeugmaschine nach Anspruch 5, **dadurch gekennzeichnet, daß** die Spannaufnahme (15) drehbar und durch einen Drehantrieb (16) rotatorisch antreibbar in dem Querschlitten (13, 14) angeordnet ist.

7. Werkzeugmaschine nach einem der Ansprüche 1 bis 6, **dadurch gekennzeichnet, daß** am Maschinenbett (1) mindestens ein Revolverkopf (18, 19) und/oder mindestens eine Motorspindel (20) als Werkzeugträger angeordnet sind.

8. Werkzeugmaschine nach Anspruch 7, **dadurch gekennzeichnet, daß** die Motorspindel (20) in einer zu den Bewegungsachsen der Kreuzschlitten (4, 5) senkrechten Achse (X-Achse) verfahrbar am Maschinengestell (1) angeordnet ist.

9. Werkzeugmaschine nach Anspruch 7 oder 8, **dadurch gekennzeichnet, daß** die Motorspindel (20) um eine zu ihrer Drehachse senkrechte Achse (26) verschwenkbar ist.

10. Werkzeugmaschine nach einem der Ansprüche 1 bis 9, **dadurch gekennzeichnet, daß** in dem Werkstückwechselbereich (10) eine Transporteinrichtung (28) zum Transport eines zu bearbeiteten Werkstücks in eine Werkstückwechselposition und zum Abtransport eines fertig bearbeiteten Werkstücks aus der Werkzstückwechselposition angeordnet ist.

11. Werkzeugmaschine nach einem der Ansprüche 2 bis 10, **dadurch gekennzeichnet, daß** die beiden Längsschlitten (11, 12) einen Mittelbereich (32) und zwei seitliche Auflagebereiche (31, 33) mit unterschiedlicher Länge aufweisen

12. Werkzeugmaschine nach Anspruch 11, **dadurch gekennzeichnet, daß** die Querschlitten (13, 14) in dem Mittelbereich der Längsschlitten (11, 12) über vertikale Führungsschienen (34, 35) motorisch verfahrbar angeordnet sind.

13. Werkzeugmaschine nach Anspruch 11 oder 12, **dadurch gekennzeichnet, daß** die beiden baugleichen Längsschlitten (11, 12) in der Draufsicht um 180° zueinander versetzt auf den beiden Seitenwänden (2, 3) angeordnet sind.
